(19) **Europäisches Patentamt / European Patent Office / Office européen des brevets**

(11) **EP 4 722 964 A1**

(12) **EUROPEAN PATENT APPLICATION**
published in accordance with Art. 153(4) EPC

(43) Date of publication:
08.04.2026  Bulletin 2026/15

(21) Application number: 24815903.0

(22) Date of filing: 31.05.2024

(51) International Patent Classification (IPC):
*G06F 21/57* (2013.01)       *H04L 9/40* (2022.01)
*G06Q 10/06* (2023.01)       *G06N 20/00* (2019.01)
*G06F 3/0484* (2022.01)

(52) Cooperative Patent Classification (CPC):
G06F 3/0484; G06F 21/57; G06N 20/00;
G06Q 10/06; H04L 9/40

(86) International application number:
PCT/KR2024/007462

(87) International publication number:
WO 2024/248529 (05.12.2024 Gazette 2024/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.05.2023  KR 20230070325
01.06.2023  KR 20230071034
07.06.2023  KR 20230072846

(71) Applicants:
• Hanwha Ocean Co., Ltd.
Geoje-si, Gyeongsangnam-do 53302 (KR)
• Cytur Inc.
Seoul 08511 (KR)

(72) Inventors:
• KWON, Eun Hyun
Seoul 07204 (KR)

• YANG, Woo Yung
Seoul 01785 (KR)
• BAE, Yang Sop
Seoul 06082 (KR)
• PARK, Dong Hoon
Sejong 30098 (KR)
• KIM, Jeong Tae
Geoje-si, Gyeongsangnam-do 53314 (KR)
• CHOO, Gyo Sig
Geoje-si, Gyeongsangnam-do 53218 (KR)
• JO, Yong Hyun
Seoul 08511 (KR)
• LIM, Hyo Seok
Seoul 08511 (KR)
• CHOI, Oong Jae
Seoul 08511 (KR)

(74) Representative: Cabinet Beau de Loménie
103, rue de Grenelle / CS 90800
75340 Paris Cedex 07 (FR)

(54) **METHOD FOR MEASURING CYBERSECURITY STATE OF SHIP, AND METHOD FOR EVALUATING CYBERSECURITY RISK AND DETECTING ABNORMAL SIGN OF SHIP**

(57)    The present invention provide a method for measuring a cybersecurity state of a ship and a method for evaluating a cybersecurity risk and detecting an abnormal sign of a ship, wherein risk data collected through various paths is indexed and scored according to various criteria, such as a risk occurrence degree, areas are divided according to importance, such as a cabin, a bridge room, and an engine room of the ship, and a quantified risk scoring for CBS for each area is provided.

[FIG. 1]

**Description**

[Technical Field]

The present invention relates to a method for measuring a ship cybersecurity state and a method for assessing a ship cybersecurity risk and detecting anomalies, in which risk data collected from various sources is indexed and scored according to various criteria, such as a risk occurrence degree and the like, and ship zones, such as cabins, bridge rooms, engine rooms, and the like, are categorized according to importance thereof to provide a quantified risk score of a CBS of each zone.

[Background Art]

In the related art, a technique for assessing or quantifying cyber risks quantifies the cyber risks based on a network connection. Since such quantification methods quantify cyber risks in a state of being connected to a general network, there are limitations in general application depending on the industry.

Currently, typical techniques for cyber threats includes a method of calculating the overall likelihood of cyber risks by weighting each node in a network to calculate the likelihood between nodes, and a method of quantifying cyber threats by installing agents on end-points to collect data that can be obtained from a system.

In a scoring method for various cyber risks, Bayesian probabilities/statistics requiring probabilistic calculations are used to derive a final risk likelihood through comparison with past network behavior, or possible cyber threats from each client are estimated and summed.

In conventional technologies, agents for risk scoring are deployed on end-points to collect possible risk data or a network is monitored to perform analysis against past behavior. However, the method of analyzing a ship network can cause excessive traffic on the network and the method of installing the agents on the end-points can violate ship availability, causing limitations in use.

In addition, methods for assessing cybersecurity risks on land are typically used in the financial sectors, nuclear facilities, general enterprises, infrastructure, and the like. Ships are required to assess cybersecurity risks at sea, and for this purpose, the International Association of Classification Society and each classification society have published cybersecurity risk assessment methods.

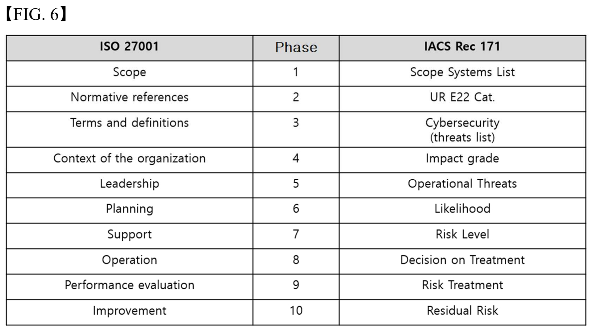

As shown in FIG. 6, a diagram comparing ISO 27001 and IACS Rec 171, the ISO 27001 Information Security Management System standardizes control items for information security. IACS Rec 171 provides a risk assessment for ships.

Accordingly, based on the control items of the ISO 27001 information security, risk assessment of a ship can be carried out through IACS Rec 171 in each phase.

In this regard, in the International Organization for Standardization (ISO) ISO 31000:2018 "Risk management - Guidelines," risk management is carried out through the processes of (1) communication and consultation, (2) scope, context and criteria, (3) risk assessment, (4) risk mitigation, (5) monitoring and review, and (6) recoding and reporting. Here, the risk assessment includes risk identification, risk analysis, and risk assessment.

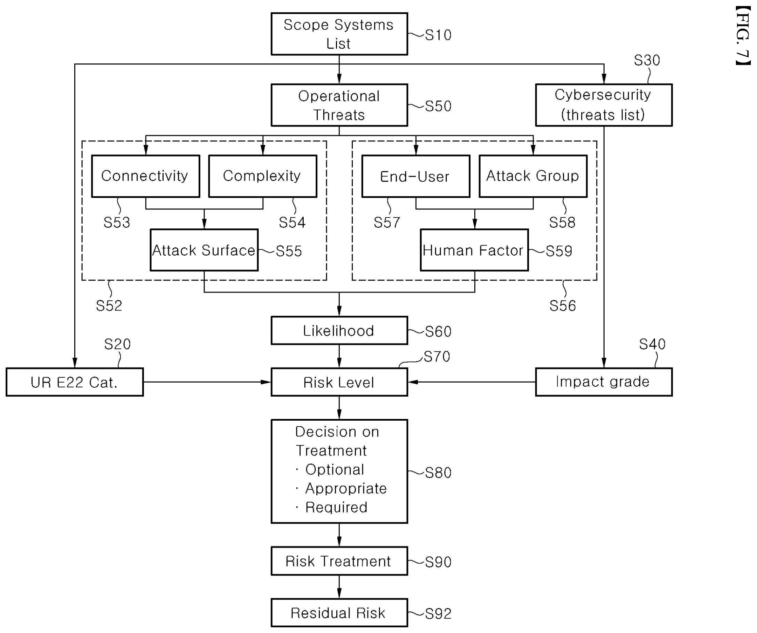

In the International Association of Classification Societies (IACS) Rec 171 "Recommendation on incorporating cyber risk management into Safety Management Systems", a risk assessment method for ships includes (1) scope defining (S10), (2) UR E22 categorization (S20), (3) threat list identification (S30), (4) threat-attack-technology impact (S40), (5) operational threats (S50), (6) risk occurrence likelihood assessment (S60), (7) risk level assessment (S70), (8) decision on risk mitigation (S80), (9) risk mitigation (S90), and (10) residual risk (S92), as shown in FIG. 7. The methods for assessing ship cybersecurity risks published by each of classification societies, such as Lloyd's Register in the UK, Bureau Veritas in France, Det Norske Veritas in Norway, and Korean Register of Shipping do not deviate from IACS Rec 171.

The three pillars of security are confidentiality, integrity, and availability, and, on land, confidentiality and integrity are prioritized among these three pillars of security.

Assets for risk assessment on land are categorized into servers, network equipment, security systems, DBMS, application programs, terminals, software, storage media, control systems, and the like.

Therefore, in the risk assessment methods proposed by IACS or each classification society, rating of end-users and attacker groups in the process of deriving the likelihood of risk occurrence during ship construction or ship operation is insufficiently performed for an insufficient period of time due to unique characteristics of a maritime environment and is ambiguous due to subjective human criteria, and thus there is a need for a quantitative method for risk assessment.

In addition, ships are composed of complex systems with multiple CBSs. Recently, as the proportion of ship facilities in an ICT environment has increased, a hacking risk and malware attacks are increasing.

Unlike land-based systems, it is not easy to apply countermeasures to block cyber risks with respect to factors impeding safe operation of ships.

If normal operation data is blocked due to malfunction, false alarms or overreactions of security equipment, such as penetration blocking systems, serious physical damage, such as collision or stranding, can occur.

For ships that are rapidly changing to the ICT environment, it is difficult to block cyber risks against a ship environment and ship facilities in real time under conditions that a cyberattack detection technique specialized for the ship's unique environment is not generally used.

Therefore, from the viewpoint of proactive prevention, it is efficient to take preventive activities by predicting cyber risks that can occur in the ship environment and calculating a possible path and extent of damage.

The related art is disclosed in Korean Patent Laid-open Publication No. 10-2020-0029266 (March 18, 2020), Korean Patent Registration No. 10-2406756 (June 10, 2022), Korean Patent Laid-open Publication No. 10-2020-0141774 (December 21, 2020), and Korean Patent Registration No. 10-0604604 (July 24, 2006).

[Disclosure]

[Technical Problem]

The object of the present invention to provide a method for measuring a ship cybersecurity state, which can maintain availability without requiring installation or access to a network of a ship by calculating a risk scale through comparison of a computer based system (CBS) of the ship with risks collected from various sources, enables indexing and scoring of risk data collected from various sources according to various criteria, such as a risk occurrence degree and the like, can classify the ship into various ship zones, such as cabins, bridge rooms, engine rooms, and the like according to importance of ship zones, and can provide a quantified risk score for the CBS of each ship zone.

Another object of the present invention to provide a method for assessing a ship cybersecurity risk, which can derive a threat exposure rating through severity of a cyber threat and a degree of exposure upon cybersecurity risk assessment, enables quantification of risk assessment using the threat exposure rating as a factor for deriving the likelihood of risk occurrence, and can be applied to risk assessment through establishment of a quantified ship cybersecurity risk assessment method in a system to contribute to solving problems in risk assessment due to specificity of a maritime environment.

A further object of the present invention to provide a method for assessing a ship cybersecurity risk, which can perform risk assessment in accordance with cybersecurity requirements of each classification society to fulfill requirements for cybersecurity in certification of each classification society.

It is yet another object of the present invention to provide a method for detecting a ship cybersecurity anomaly based on machine learning, which can prevent security accidents by predicting possible cyber risks based on a ship network topology and CBS (Computer based System) characteristics information and threat information detected in real time, and can prevent possible risks due to real-time penetration blocking, such as false alarms and overreactions of security equipment.

[Technical Solution]

In accordance with one aspect of the present invention, a method for measuring a ship cybersecurity state include: a data collection step in which computer based system (CBS) data of a ship is collected together with cyber threat and maritime intelligence data for CBSs; a zone-specific CBS collection and management step; a data indexing step in which data indexing is performed based on cyber threat score criteria; a zone-specific risk score calculation step; and a risk mitigation step in which a ship cybersecurity state is derived according to a risk score and a risk is mitigated.

The cyber threat and maritime intelligence collection step may include collecting IT cyber risk intelligence and OT cyber risk intelligence, and validating the intelligence data.

The zone-specific CBS collection and management step may include: managing CBSs in each ship zone; categorizing the CBSs in each ship zone; listing the CBSs in each ship zone; and assessing a risk in each ship zone.

The data indexing step may include: categorizing cyber threats;
prioritizing the cyber threats; unifying the cyber threats; and scoring the cyber threats by priority.

The zone-specific risk score calculation step may further include a weighting step in which a risk score is weighted according to importance of ship zones including a cabin, a bridge room, an engine room, and the like.

In accordance with another aspect of the present invention, a method for assessing a ship cybersecurity risk may include a scoping step in which cybersecurity requirements for classification societies planned to certify a ship as a risk assessment target are retrieved upon risk assessment and assets of the ship are identified to set a cybersecurity scope; a data collection step in which the assets of the ship within the security scope set in the scoping step are categorized according to a computer based system (CBS) and a data collection unit collects transmission/reception data for a plurality of networks connected to the categorized assets; and a risk assessment step in which a list of threats is identified and analyzed from the data collected in the data collection step to perform a cybersecurity risk assessment of cybersecurity threats for each of the plurality of networks.

The scoping step may include: retrieving the cybersecurity requirements from a database (DB) storing cybersecurity rules required by each of the classification societies planned to certify the ship; and setting the scope of the cybersecurity risk assessment by identifying the assets of the ship according to the cybersecurity requirements for the classification societies planned to certify the ship upon risk assessment.

The data collection step may include identifying the assets of the ship and setting a data collecting duration by taking into account importance of the assets according to CBS categorization.

The risk assessment step may include an impact assessment step, an attack surface assessment step, a threat exposure assessment step, and a risk occurrence likelihood assessment step.

The threat exposure assessment step may include assessing threat exposure based on an exposure rating calculated by assessing severity and a degree of exposure instead of applying an end-user and an attacker group for calculating human factors.

The threat exposure may be assessed based on two factors including severity and the degree of exposure, the severity being categorized into four levels of severity from 1 to 4 represented by Low, Medium, High, and Critical, respectively, the degree of exposure being categorized into five levels from 1 to 5 represented by None, CVE, MCTI, Dark Web, and Naval, respectively; and once the severity and the degree of exposure are determined, threat exposure ratings may be calculated and categorized into five levels by adding a rating value of each factor.

In accordance with a further aspect of the present invention, a method for detecting a ship cybersecurity anomaly based on machine learning includes: a CBS attack surface information scanning step in which CBS attack surface information is scanned in real time through a CBS definition unit; a CBS attack surface quantification step in which the CBS definition unit quantifies a CBS attack surface based on the CBS attack surface information scanned in the CBS attack surface information scanning step; a cyber risk index calculation step in which a risk analysis unit calculates a cyber risk index through machine learning for a CBS quantified in the CBS attack surface quantification step; and an anomaly graph creation step in which the risk analysis unit analyzes the cyber risk index calculated in the cyber risk index calculation step to create an anomaly graph indicating a high hacking risk path in the CBS.

The cyber risk index calculation step may include generating a risk table based on CBS security vulnerability information detected in a ship, attack surface information of CVE and the ship, and information identified from a penetration detection system connected to an on-board network of the ship.

In the cyber risk index calculation step, the identified information may include source IP, destination IP, and detection rule importance information to generate the risk table; and, if CBS security control is set, the cyber risk index may be calculated by referencing a security control table.

In the anomaly graph creation step, the risk table and a security control table may be applied to a network topology to map the high hacking risk path in the CBS.

In the anomaly graph creation step, the network topology may be used to generate the anomaly graph through a tree topology.

[Advantageous Effects]

The present invention can maintain availability without requiring installation or access to a network of the ship by calculating a risk scale through comparison of a computer based system (CBS) of a ship with risks collected from various sources, enables indexing and scoring of risk data collected from various sources according to various criteria, such as a risk occurrence degree and the like, and can classify the ship into various ship zones, such as cabins, bridge rooms, engine rooms, and the like according to importance of ship zones. The present invention has an effect of providing a quantified risk score for the CBS of each ship zone.

In addition, the present invention can derive a threat exposure rating through severity of a cyber threat and a degree of exposure upon cybersecurity risk assessment and enables quantification of risk assessment using the threat exposure rating as a factor for deriving the likelihood of risk occurrence.

In addition, the present invention can be applied to risk assessment through establishment of a quantified ship cybersecurity risk assessment method in a system to contribute to solving problems in risk assessment due to specificity of a maritime environment.

Furthermore, the present invention can fulfill requirements for cybersecurity in certification of each classification society by performing risk assessment in accordance with cybersecurity requirements of each classification society.

Furthermore, the present invention can prevent security accidents by predicting possible cyber risks based on a ship network topology and CBS (Computer based System) characteristics information and threat information detected in real time, and can prevent possible risks due to real-time penetration blocking, such as false alarms and overreactions of security equipment.

[Description of Drawings]

FIG. 1 is a drawing illustrating a method of calculating a risk score for each zone of a ship and a weighting method according to importance of each zone in a method for measuring a ship cybersecurity state according to the present invention.

FIG. 2 is a schematic block diagram of the method for measuring a ship cybersecurity state according to the present invention.

FIG. 3 is a diagram illustrating the step of CBS collection and management according to ship zones in the method for measuring a ship cybersecurity state according to the present invention.

FIG. 4 is a diagram illustrating the step of indexing data based on cyber threat score criteria in the method for measuring a ship cybersecurity state according to the present invention.

FIG. 5 is a flow diagram illustrating the method for measuring a ship cybersecurity state according to the present invention.

FIG. 6 is a table illustrating information protection items of the International Standards Organization (ISO) and risk assessment items of the International Association of Classification Societies (IACS).

FIG. 7 is a block diagram illustrating a risk assessment procedure of the International Association of Classification Societies (IACS).

FIG. 8 is a block diagram illustrating a procedure for a ship cybersecurity risk assessment according to an embodiment of the present invention.

FIG. 9 is a block diagram of an assessment system for performing a ship cybersecurity risk assessment according to the present invention.

FIG. 10 is a block diagram of a method for assessing a ship cybersecurity risk according to an embodiment of the present invention.

FIG. 11 is a flowchart illustrating a method for detecting a ship cybersecurity anomaly based on machine learning according to an embodiment of the present invention.

FIG. 12 is a diagram illustrating a risk table including a security control table in the method for detecting a ship cybersecurity anomaly based on machine learning according to the present invention.

FIG. 13 is a mapping diagram showing a high hacking risk path in a ship's CBS obtained by applying a risk degree and a security control table to a ship's network topology according to an embodiment of the present invention.

[Best Mode]

The above and other aspects, features, and advantages of the present invention will become apparent from the detailed description of the following embodiments in conjunction with the accompanying drawings.

The terminology used herein is for the purpose of describing particular embodiments and is not intended to be limiting. As used herein, the terms "comprises," "comprising," "includes," and/or "including," when used in this specification, specify the presence of stated features, integers, steps, operations, elements, components, and/or groups thereof, but do not preclude the presence or addition of one or more other features, integers, steps, operations, elements, components, and/or groups thereof. Further, as used herein, the singular forms "a", "an" and "the" are intended to include the plural forms as well, unless the context clearly indicates otherwise.

Hereinafter, exemplary embodiments of the present invention will be described in detail with reference to the accompanying drawings. It should be understood that the embodiments are provided for complete disclosure and thorough understanding of the present invention by those skilled in the art and that the present invention is not limited to the following embodiments and may be embodied in different ways by those skilled in the art.

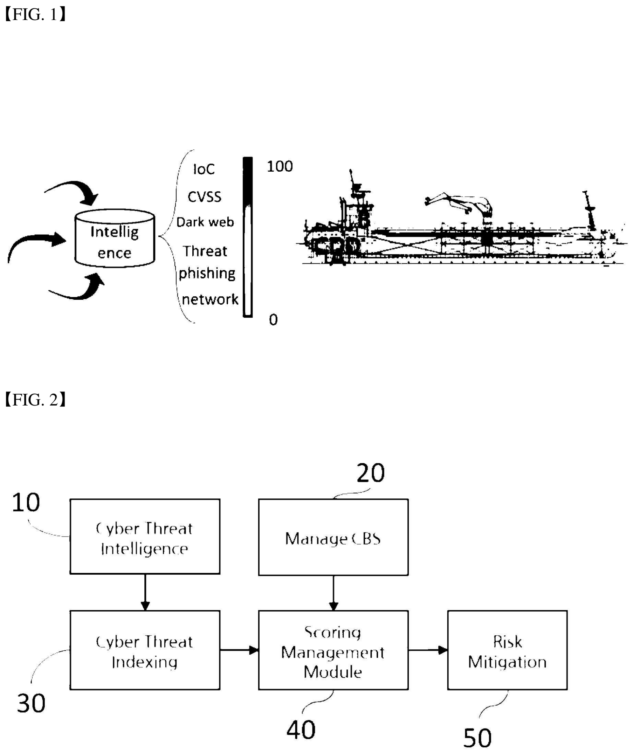

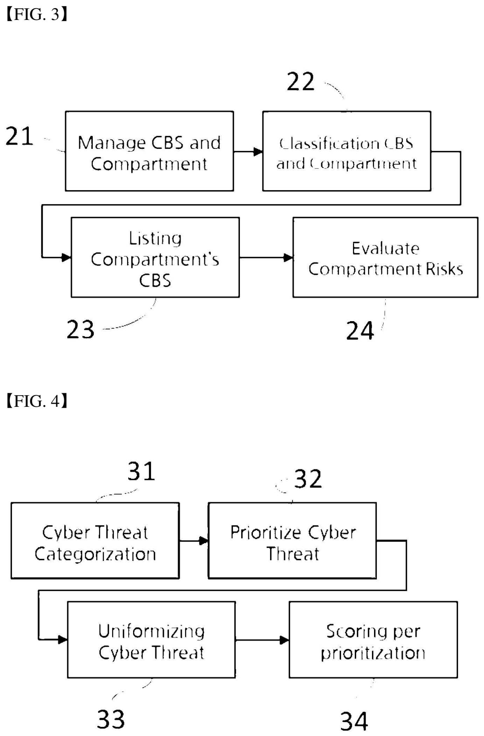

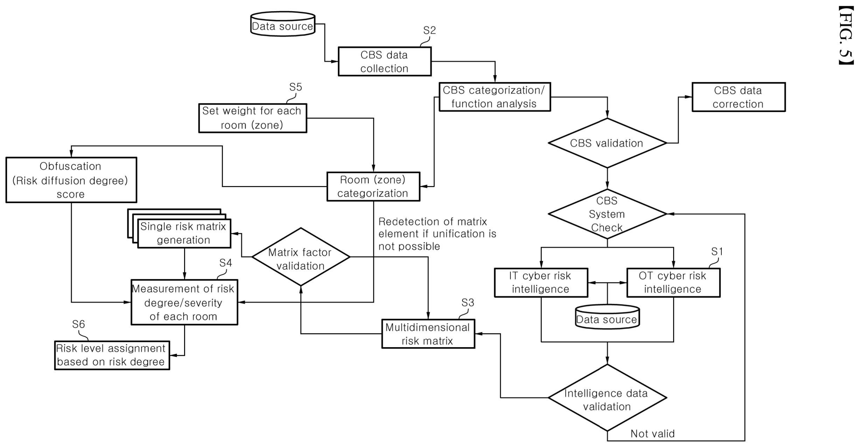

FIG. 1 is a drawing illustrating a method of calculating a risk score for each zone of a ship and a weighting method according to importance of each zone in a method for measuring a ship cybersecurity state according to the present invention, FIG. 2 is a schematic block diagram of the method for measuring a ship cybersecurity state according to the present invention, FIG. 3 is a diagram illustrating the step of CBS collection and management according to ship zones in the method for measuring a ship cybersecurity state according to the present invention, FIG. 4 is a diagram illustrating the step of indexing data based on cyber threat score criteria in the method for measuring a ship cybersecurity state according to the present invention, and FIG. 5 is a flow diagram illustrating the method for measuring a ship cybersecurity state according to the present invention.

Referring to FIG. 1 to FIG. 5, the method for measuring a ship cybersecurity state according to the present invention includes collecting cyber threats/maritime intelligence.

Cyber Threat Intelligence (CTI) refers to a method of effectively counteracting threats through collection of threat information and analysis of a situation.

The method includes collecting and managing CBS (Computer Based System) data for each ship zone, and indexing the data based on cyber threat score criteria to calculate a risk score for each ship zone.

Here, the risk score for each ship zone may be calculated by weighting according to importance of each ship zone.

Furthermore, a ship cybersecurity state measurement system for performing the method for measuring the ship cybersecurity state according to the present invention may include a cyber threat/maritime intelligence data collection unit 10, a CBS data management unit 20, a cyber threat indexing unit 30, a zone-specific risk score calculation unit 40, and a cybersecurity state derivation/risk mitigation unit 50.

As shown in FIG. 1, cyber threat/maritime intelligence may be collected and weighted according to importance of each ship zone (steps A to D) to calculate a risk score from 0 to 100.

In addition, the method for measuring a ship cybersecurity state according to the present invention may include: a data collection step 10 in which overall CBS data of a ship is collected together with cyber threat and maritime intelligence data for CBSs; a zone-specific CBS collection and management step 20; a data indexing step 30 based on cyber threat score criteria; a zone-specific risk score calculation step 40; and a risk mitigation step 50 in which a ship cybersecurity state is derived according to a risk score and a risk is mitigated.

In the data collection step 10, information technology (IT) cyber risk intelligence and operational technology (OT) cyber risk intelligence data is collected and validated.

In addition, the zone-specific CBS collection and management step 20 may include a zone-specific CBS management step 21, a zone-specific CBS categorization step 22, a zone-specific CBS listing step 23, and a zone-specific risk assessment step 24, as shown in FIG. 3.

Further, the data indexing step 30 may include a cyber threat categorization step 31, a cyber threat prioritization step 32, a cyber threat unifying step 33, and a priority rating scoring step 34, as shown in FIG. 4.

Further, the zone-specific risk score calculation step 40 may further include a weighting step 45, in which the risk score is weighted according to importance of each of the ship zones including a cabin, a bridge room, an engine room, and the like.

More specifically, referring to FIG. 5, in the method for measuring a ship cybersecurity state according to the present invention, a data collection step S1, in which cyber threat and maritime intelligence data is collected, may include collecting IT (Information Technology) cyber risk intelligence and OT (Operational Technology) cyber risk intelligence through a data source, and validating the intelligence data (S11).

Here, in the data collection step S1, the maritime intelligence data may be collected in advance and stored in a data source, or may be collected by receiving the stored data.

A zone-specific CBS collection and management step S2 may include collecting ship CBS data through the data source (S21), categorizing CBSs/analyzing functions of the CBSs (S22), validating the categorized CBSs (S23), correcting invalid CBS data (S24), and managing a CBS system (S25).

In a data indexing step S3 based on cyber threat score criteria, a multidimensional risk matrix lists possible risk matrixes of a registered CBS and a risk score is assigned to each of CBS categorization, access rights, intrusion cases, vulnerabilities, external connection states, accessible ports, and power in a scoring process for rating.

Therefore, the data indexing step S3 based on the cyber threat score criteria includes creating a multidimensional risk matrix (S31), validating matrix factors (S32), and finally creating a single risk matrix (S33) to derive a matrix that integrates the scores of all registered CBSs.

If it is not possible to generate a single risk matrix, matrix factors are researched (S34), or if a CBS not conforming to the multidimensional risk matrix is registered, it is calculated as an exception and assigned a N/A rating.

In a zone-specific risk score calculation step S4, a risk degree/severity of each ship zone are measured (S41).

Here, a weight may be set according to importance of each ship zone (S45) and a lower weight may be set when a ship zone (room) is separated from the outside (closed) upon zone categorization.

In a risk mitigation step (S5), a rating may be assigned based on the risk level,
a ship cybersecurity state according to the risk score may be derived, and a risk may be mitigated.

Thus, the present invention can maintain availability without requiring installation or access to a network of the ship by calculating a risk scale through comparison of a computer based system (CBS) of a ship with risks collected from various sources, enables indexing and scoring of risk data collected from various sources according to various criteria, such as a risk occurrence degree and the like, and can classify the ship into various ship zones, such as cabins, bridge rooms, engine rooms, and the like according to importance of ship zones. The present invention has an effect of providing a quantified risk score for the CBS of each ship zone.

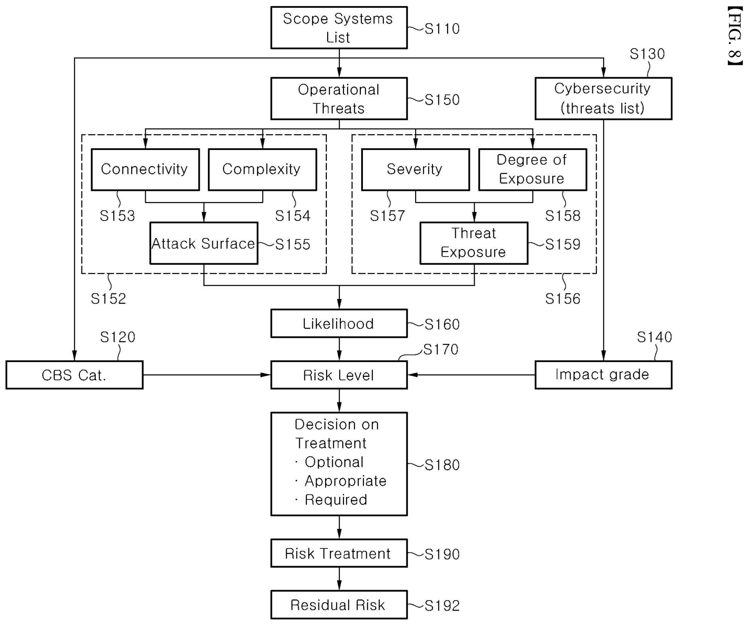

Referring to FIG. 8 to FIG. 10, a method for assessing a ship cybersecurity risk according to the present invention may include: a scoping step in which cybersecurity requirements for classification societies planned to certify a ship as a risk assessment target are retrieved upon risk assessment and assets of the ship are identified to set a cybersecurity scope; a CBS categorization step in which CBSs within the cybersecurity scope set in the scoping step are categorized; a data collection step in which a data collection unit collects transmission/reception data for a plurality of networks connected to the assets categorized in the CBS categorization step; and a risk assessment step in which a list of threats is identified and analyzed from the data collected in the data collection step to perform a cybersecurity risk assessment of cybersecurity threats for each of the plurality of networks.

More specifically, as shown in FIG. 8, the method for assessing a ship cybersecurity risk may include (1) a scoping step S110, (2) a computer based system (CBS) categorization step S120, (3) a threat list identification step S130, (4) an impact grade assessment step S140, (5) an operational threat assessment step S150, (6) a risk occurrence likelihood assessment step S160, (7) a risk level assessment step S170, (8) a risk countermeasure decision step S180, (9) a risk mitigation step S190, and (10) a residual risk assessment step S192.

In the scoping step S110, the cybersecurity requirements of each classification society planned to certify the ship as the risk assessment target may be retrieved and the assets of the ship are identified to set the cybersecurity scope.

In the CBS categorization step S120, the assets of the ship belonging to a CBS (Computer Based System) category are categorized.

Ships emphasize availability as one of the three pillars of security. In addition, the ship's assets are categorized as systems included in the CBS (Computer Based System) category. Therefore, the assets should be categorized according to CBSs upon identification and categorization of the assets in a ship cybersecurity risk assessment, and risk analysis and risk countermeasure are performed in consideration of availability.

In the threat list identification step S130, a list of assets exposed to possible cybersecurity threats in the CBS category are identified, and transmission/reception data for a plurality of networks connected to the assets may be collected.

In identification of core equipment and systems, on-board core assets of the ship vulnerable to cyberattacks may be identified and assessed.

In impact assessment, consequences of threats may be considered in terms of availability in the system.

In this case, networks may include Very Small Aperture Terminals (VSATs), Information Technology (IT) networks, Operational Technology (OT) networks, and the like, which interfaces with satellites.

The method may also include a risk assessment step in which a list of threats identified in the threat list identification step S130 is analyzed to perform a cybersecurity risk assessment of cybersecurity threats for each of the plurality of networks.

The risk assessment step may include the impact grade assessment step S140, the operational threat assessment step S150, and the risk occurrence likelihood assessment step S160.

The operational threat assessment step S150 may include an attack surface assessment step S155, which is a first assessment step, and a threat exposure assessment step S159, which is a second assessment step.

In the attack surface evaluation step S155, an attack surface may be assessed by considering connectivity S152 and complexity S154.

In the threat exposure assessment step S159, threat exposure may be assessed by deriving an exposure rating through threat severity (S157) and the degree of exposure (S158).

That is, the severity, the degree of exposure, and the threat exposure are presented as factors that can replace an end-user, an attacker group, and human factors, which are difficult to assess upon risk assessment in IACS Rec 171 taking into account differences between land and sea, and the presented factors have the effect of assessing a clear and quantified level of risk on a ship.

Therefore, according to the present invention, since it is difficult to clearly determine an end-user and an attacker group for calculating human factors in risk assessment of IACS Rec 171, it is possible to replace the end-user and the attacker group with threat exposure to assess a clear and quantified level of risk.

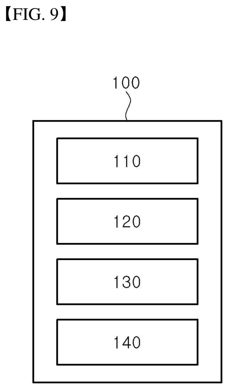

Referring to FIG. 9, a ship cybersecurity risk assessment system 100 may include a risk assessment scoping unit 110 configured to set a risk assessment scope by setting a cybersecurity scope according to cybersecurity requirements for each classification society, a data collection unit 120 configured to collect transmission/reception data for a plurality of networks, an analysis unit 130 configured to identify and analyze a list of threats in a CBS category to perform a cybersecurity risk assessment of cybersecurity threats for each of the plurality of networks, a database 140 configured to store cybersecurity rules required by each classification society, and a controller 150 configured to control risk assessment timing according to importance of assets.

Thus, the method for assessing a ship cybersecurity risk according to the present invention includes the scoping step in which the cybersecurity scope according to cybersecurity requirements for each classification society is set and databased in the risk assessment scoping unit 110 of the ship cybersecurity risk assessment system 100, the data collection step in which the assets of the ship within the security scope set in the scoping step and stored in the database unit 140 are categorized according to the computer based system (CBS), and transmission/reception data for the plurality of networks connected to the categorized assets is collected in the data collection unit 120, and a risk assessment step in which a list of threats is identified from the data collected in the data collection step and risks considering availability are analyzed in the risk analysis unit 130 to perform a cybersecurity risk assessment of cybersecurity threats of each of the plurality of networks.

In addition, in the scoping step, a database (DB) of cybersecurity rules required by each classification society planned to certify the ship may be created, and a scope of the cybersecurity risk assessment may be set to meet the cybersecurity requirements of the classification societies planned to certify the ship during the risk assessment.

Further, in the data collection step, the assets of the ship may be categorized and the controller 150 may set the data collection timing considering importance of the assets according to CBS categorization.

Further, the risk assessment step may include an impact grade assessment step, an attack surface assessment step, a threat exposure assessment step, and a likelihood assessment step. In the threat exposure assessment step, threat exposure may be assessed by deriving an exposure rating based on severity of a threat and the degree of exposure.

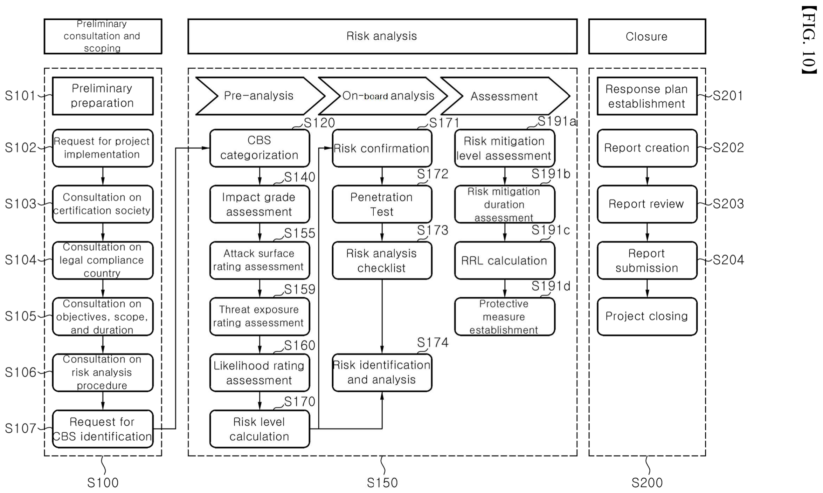

Referring to FIG. 10, the method for assessing a ship cybersecurity risk according to the embodiment of the present invention may include a preliminary consultation and scoping step S100, a risk analysis step S150, and a closure step S200, in which the preliminary consultation and scoping step S100 may include preliminary preparation S101; request for project implementation S102; consultation on certification society S103; consultation on legal compliance country S104; consultation on objectives, scope, and duration S105; consultation on risk analysis procedure S106; and request for CBS identification S107.

Furthermore, the risk analysis step S150 may include a pre-analysis step, an on-board analysis step, and an assessment step.

The pre-analysis step may include CBS categorization (S120), impact grade assessment (S140), attack surface rating assessment (S155), threat exposure rating assessment (S159), likelihood rating assessment (S160), and risk level calculation (S170).

Further, the threat exposure rating assessment (S159) may be based on two factors including severity and the degree of exposure, wherein the Severity is categorized into four levels of severity from 1 to 4 represented by Low, Medium, High, and Critical, respectively, and the degree of exposure is categorized into five levels from 1 to 5 represented by None, CVE, MCTI, Dark Web, and Naval, respectively, and once the severity and the degree of exposure are determined, threat exposure ratings may be calculated and categorized into five levels from 1 to 5 by adding a rating value of each factor, in which the degree of exposure categorized into Naval is Level 5 regardless of severity.

Furthermore, the on-board analysis may include risk confirmation (S171), penetration testing (S172), risk analysis checklist (S173), and risk identification and analysis (S174).

Further, the assessment step may include risk mitigation level assessment (S191a), risk mitigation duration assessment (S191b), response rate limiting (RRL) calculation (S191c), and protective measure establishment (S191d).

Further, the closure step may include response plan establishment (S201), report recording (S202), report review (S203), report submission (S204), and project closing (S205).

According to the present invention, in cybersecurity risk assessment, severity and the degree exposure of a threat may be utilized as factors to derive a threat exposure rating and the likelihood of risk occurrence, thereby enabling quantification of the risk assessment.

In addition, according to the invention, a quantified ship cybersecurity risk assessment method is built into a system and applied to the risk assessment, thereby providing an effect of contributing to solving the problems of the risk assessment due to unique characteristics of a maritime environment.

Furthermore, the present invention has the effect of fulfilling cybersecurity requirements of classification societies by performing a risk assessment in accordance with the cybersecurity requirements of each classification society.

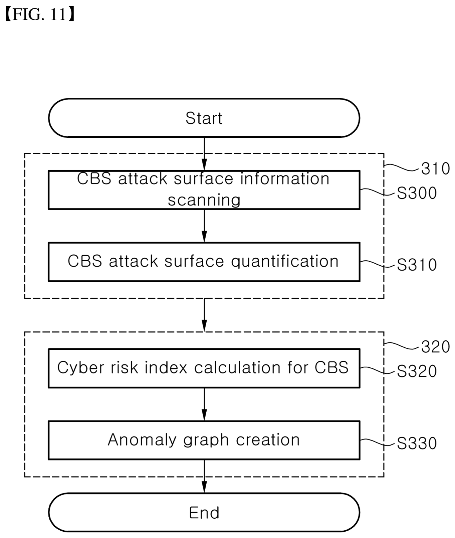

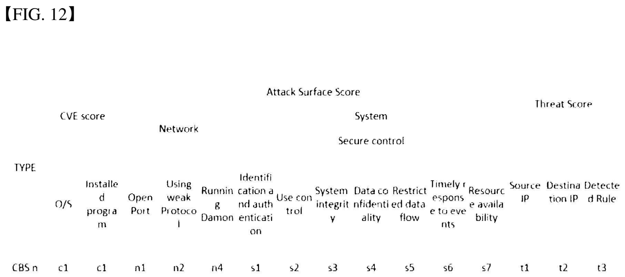

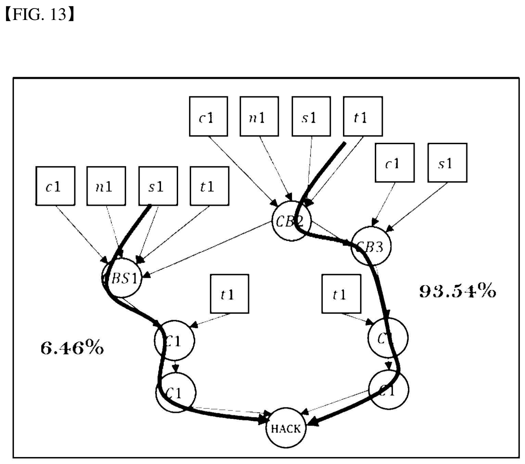

FIG. 11 is a flowchart illustrating a method for detecting a ship cybersecurity anomaly based on machine learning according to an embodiment of the present invention, FIG. 12 is a diagram illustrating a risk table including a security control table in the method for detecting a ship cybersecurity anomaly based on machine learning according to the present invention, and FIG. 13 is a mapping diagram showing a high hacking risk path in a ship's CBS obtained by imposing a risk degree and a security control table on a ship's network topology according to an embodiment of the present invention.

Referring to FIG. 11 to FIG. 13, a method for detecting a ship cybersecurity anomaly based on machine learning according to one embodiment of the invention may include a CBS attack surface information scanning step S300, a CBS attack surface quantification step S310, a cyber risk index calculation step S320, and an anomaly graph creation step S330.

More specifically, as shown in FIG. 11, in the CBS attack surface information scanning step S300, information of CBS attack surfaces is scanned through a CBS definition unit 310.

In the CBS attack surface quantification step S310, the CBS definition unit 310 may quantify the CBS attack surfaces based on the CBS attack surface information scanned in the CBS attack surface information scanning step S300.

That is, as the proportion of ship facilities in an ICT environment is increasing, it is possible to prevent damage by quantifying CBS attack surfaces specialized for a unique environment of the ship, predicting cyber risks in advance, and calculating possible damage paths and damage scope.

In the cyber risk index calculation step S320, a cyber risk index may be calculated in a risk analysis unit 320 through machine learning for a CBS quantified in the CBS attack surface quantification step S310.

The probability of cyber risk occurrence may be calculated by the following formula.

$$P(hack|cbs) = \frac{P(hack|cbs) \cdot P(hack)}{P(cbs)}$$

In addition, the following formula indicates the probability of damage by cyberattacks caused by a CBS detected inside the ship.

$$P(hack|cbs)$$

Furthermore, in the anomaly graph creation step S330, the risk analysis unit 320 may generate and map a high hacking risk path in the CBS to display the high hacking risk path by analyzing the cyber risk index calculated in the cyber risk index calculation step S320.

Here, the CBS value may be obtained from a risk table generated based on security vulnerability information of the CBS mounted inside the ship, the CVE, the attack surface information of the ship, and the information identified from a penetration detection system installed in the internal network of the ship.

The attack surface information of the ship may be obtained from open port information, running service information, running daemon information, and the like.

Further, in the cyber risk index calculation step S320, the identified information may include source IP, destination IP, and detection rule importance information to generate a risk table.

In addition, if CBS security control is set, a cyber risk index may be calculated by referencing a security control table.

That is, since the risk can be mitigated if the CBS security control is set, the risk table may be generated to include the security control table, as shown in FIG. 12.

Furthermore, as shown in FIG. 13, in the method for detecting a ship cybersecurity anomaly based on machine learning according to the embodiment of the present invention, the risk table and the security control table may be imposed on a network topology to map the high hacking risk path in the CBS, in the anomaly graph creation step S130.

The network topology refers to a pattern or arrangement, in which network devices and computer systems are connected to each other, and the network refers to nodes representing computers or devices connected to share information and data.

In addition, topology refers to a pattern and design of connections between different interconnected nodes that oversee the flow of information.

Further, in the anomaly graph creation step S330, the network topology may generate the anomaly graph through a tree topology.

The tree topology may be formed by combination of stars and a bus topology.

The tree topology allows easy installation of new expansion networks due to the star characteristics thereof and ease of troubleshooting of connected nodes has an effect of improving efficiency of the network without affecting a main network.

Furthermore, the tree topology has an advantage of being able to transmit signals over long distances without signal loss.

Therefore, according to the present invention, it is possible to prevent security accidents by predicting possible cyber risks based on a ship network topology and CBS (Computer based System) characteristics information and threat information detected in real time, and to prevent possible risks due to real-time penetration blocking, such as false alarms and overreactions of security equipment.

Embodiments of the present invention described above may be implemented in the form of program instructions executable by various computer components and recorded on a computer-readable recording medium. The computer-readable recording medium may include program instructions, a data file, a data structure, and the like, solely or in combination. The program instructions recorded on the computer-readable recording medium may be specially designed and constructed for the present invention or may be those known and available to those skilled in the art of computer software. Examples of the computer-readable medium include a hardware device specifically configured to store and execute the program instructions, including: magnetic media, such as hard disks, floppy disks, and magnetic tape; optical recording media, such as CD-ROMs and DVDs; magneto-optical media, such as floptical disks; ROMs; RAMs; and flash memories. Examples of the program commands include not only machine language code generated by a compiler, but also high-level language code executable on a computer using an interpreter or the like. The hardware device may be configured to operate as one or more software modules to perform the operations according to the present invention, or vice versa.

Although some embodiments have been described herein, it should be understood that these embodiments are provided for illustration only and are not to be construed in any way as limiting the present invention, and that various modifications and changes can be made by those skilled in the art without departing from the spirit and scope of the invention. Therefore, the accompanying claims and their equivalents are intended to cover such changes or modifications as would fall within the scope and spirit of the present invention.

**Claims**

1. A method for measuring a ship cybersecurity state, comprising:

   a data collection step in which Computer Based System (CBS) data of a ship is collected together with cyber threat and maritime intelligence data for CBSs;
   a zone-specific CBS collection and management step;
   a data indexing step in which data indexing is performed based on cyber threat score criteria;
   a zone-specific risk score calculation step; and
   a risk mitigation step in which a ship cybersecurity state is derived according to a risk score and a risk is mitigated.

2. The method for measuring a ship cybersecurity state according to claim 1, wherein the cyber threat and maritime intelligence collection step comprises collecting IT cyber risk intelligence and OT cyber risk intelligence, and validating the intelligence data.

3. The method for measuring a ship cybersecurity state according to claim 1, wherein the zone-specific CBS collection and management step comprises:

   Managing CBSs in each ship zone;
   categorizing the CBSs in each ship zone;
   listing the CBSs in each ship zone; and
   assessing a risk in each ship zone.

4. The method for measuring a ship cybersecurity state according to claim 1, wherein the data indexing step comprises:

   categorizing cyber threats;
   prioritizing the cyber threats;
   unifying the cyber threats; and
   scoring the cyber threats by priority.

5. The method for measuring a ship cybersecurity state according to claim 1, wherein the zone-specific risk score calculation step further comprises a weighting step in which a risk score is weighted according to importance of ship zones including a cabin, a bridge room, an engine room, and the like.

6. A method for assessing a ship cybersecurity risk, comprising:

   a scoping step in which cybersecurity requirements for classification societies planned to certify a ship as a risk assessment target are retrieved upon risk assessment and assets of the ship are identified to set a cybersecurity scope;
   a data collection step in which the assets of the ship within the security scope set in the scoping step are categorized according to a Computer Based System (CBS) and a data collection unit collects transmission/reception data for a plurality of networks connected to the categorized assets; and
   a risk assessment step in which a list of threats is identified and analyzed from the data collected in the data collection step to perform a cybersecurity risk assessment of cybersecurity threats for each of the plurality of networks.

7. The method for assessing a ship cybersecurity risk according to claim 6, wherein the scoping step comprises: retrieving the cybersecurity requirements from a database (DB) storing cybersecurity rules required by each of the classification societies planned to certify the ship; and setting the scope of the cybersecurity risk assessment by identifying the assets of the ship according to the cybersecurity requirements for the classification societies planned to certify the ship upon risk assessment.

8. The method for assessing a ship cybersecurity risk according to claim 6, wherein the data collection step comprises identifying the assets of the ship and setting a data collecting duration by taking into account importance of the assets according to CBS categorization.

9. The method for assessing a ship cybersecurity risk according to claim 6, wherein the risk assessment step comprises an impact assessment step, an attack surface assessment step, a threat exposure assessment step, and a risk occurrence likelihood assessment step.

10. The method for assessing a ship cybersecurity risk according to claim 9, wherein the threat exposure assessment step comprises assessing threat exposure based on an exposure rating calculated by assessing severity and a degree of exposure instead of applying an end-user and an attacker group for calculating human factors.

11. The method for assessing a ship cybersecurity risk according to claim 10, wherein the threat exposure is assessed based on two factors comprising severity and the degree of exposure, the severity being categorized into four levels of severity from 1 to 4 represented by Low, Medium, High, and Critical, respectively,

the degree of exposure being categorized into five levels from 1 to 5 represented by None, CVE, MCTI, Dark Web, and Naval, respectively; and
once the severity and the degree of exposure are determined, threat exposure ratings are calculated and categorized into five levels by adding a rating value of each factor.

12. A method for detecting a ship cybersecurity anomaly based on machine learning, comprising:

a CBS attack surface information scanning step in which CBS attack surface information is scanned in real time through a CBS definition unit;
a CBS attack surface quantification step in which the CBS definition unit quantifies a CBS attack surface based on the CBS attack surface information scanned in the CBS attack surface information scanning step;
a cyber risk index calculation step in which a risk analysis unit calculates a cyber risk index through machine learning for a CBS quantified in the CBS attack surface quantification step; and
an anomaly graph creation step in which the risk analysis unit analyzes the cyber risk index calculated in the cyber risk index calculation step to create an anomaly graph indicating a high hacking risk path in the CBS.

13. The method for detecting a ship cybersecurity anomaly based on machine learning according to claim 12, wherein the cyber risk index calculation step comprises generating a risk table based on CBS security vulnerability information detected in a ship, attack surface information of CVE and the ship, and information identified from a penetration detection system connected to an on-board network of the ship.

14. The method for detecting a ship cybersecurity anomaly based on machine learning according to claim 13, wherein, in the cyber risk index calculation step,

the identified information comprises source IP, destination IP, and detection rule importance information to generate the risk table; and,
if CBS security control is set, the cyber risk index is calculated by referencing a security control table.

15. The method for detecting a ship cybersecurity anomaly based on machine learning according to claim 12, wherein, in the anomaly graph creation step, the risk table and a security control table are applied to a network topology to map the high hacking risk path in the CBS.

16. The method for detecting a ship cybersecurity anomaly based on machine learning according to claim 12, wherein, in the anomaly graph creation step, a network topology is used to generate the anomaly graph through a tree topology.

【FIG. 1】

【FIG. 2】

【FIG. 3】

21 → Manage CBS and Compartment → 22 Classification CBS and Compartment

23 Listing Compartment's CBS → 24 Evaluate Compartment Risks

【FIG. 4】

31 Cyber Threat Categorization → 32 Prioritize Cyber Threat

33 Uniformizing Cyber Threat → 34 Scoring per prioritization

【FIG. 5】

【FIG. 6】

| ISO 27001 | Phase | IACS Rec 171 |
|---|---|---|
| Scope | 1 | Scope Systems List |
| Normative references | 2 | UR E22 Cat. |
| Terms and definitions | 3 | Cybersecurity (threats list) |
| Context of the organization | 4 | Impact grade |
| Leadership | 5 | Operational Threats |
| Planning | 6 | Likelihood |
| Support | 7 | Risk Level |
| Operation | 8 | Decision on Treatment |
| Performance evaluation | 9 | Risk Treatment |
| Improvement | 10 | Residual Risk |

【FIG. 7】

[FIG. 8]

Scope Systems List ~S110

Operational Threats ~S150

Cybersecurity (threats list) — S130

S152
Connectivity ~S153
Complexity ~S154
Attack Surface ~S155

S156
Severity ~S157
Degree of Exposure ~S158
Threat Exposure ~S159

Likelihood ~S160

CBS Cat. ~S120

Risk Level ~S170

Impact grade ~S140

Decision on Treatment
· Optional
· Appropriate
· Required ~S180

Risk Treatment ~S190

Residual Risk ~S192

【FIG. 9】

【FIG. 10】

Preliminary consultation and scoping (S100)
- Preliminary preparation (S101)
- Request for project implementation (S102)
- Consultation on certification society (S103)
- Consultation on legal compliance country (S104)
- Consultation on objectives, scope, and duration (S105)
- Consultation on risk analysis procedure (S106)
- Request for CBS identification (S107)

Risk analysis (S150)

Pre-analysis (S120)
- CBS categorization (S140)
- Impact grade assessment (S155)
- Attack surface rating assessment (S159)
- Threat exposure rating assessment (S160)
- Likelihood rating assessment (S170)
- Risk level calculation

On-board analysis (S171)
- Risk confirmation (S172)
- Penetration Test (S173)
- Risk analysis checklist (S174)
- Risk identification and analysis

Assessment (S191a)
- Risk mitigation level assessment (S191b)
- Risk mitigation duration assessment (S191c)
- RRL calculation (S191d)
- Protective measure establishment

Closure (S200)
- Response plan establishment (S201)
- Report creation (S202)
- Report review (S203)
- Report submission (S204)
- Project closing

【FIG. 11】

```
              ┌─────────────────────┐
              │        Start        │
              └─────────────────────┘
                         │
    ┌ ─ ─ ─ ─ ─ ─ ─ ─ ─ ─│─ ─ ─ ─ ─ ─ ─ ┐      ⌒310
    │   ┌───────────────────────────────┐│ ⌐S300
    │   │ CBS attack surface information ││
    │   │           scanning            ││
    │   └───────────────────────────────┘│
    │                  │                 │
    │   ┌───────────────────────────────┐│
    │   │  CBS attack surface quantification│─S310
    │   └───────────────────────────────┘│
    └ ─ ─ ─ ─ ─ ─ ─ ─ ─ ┼ ─ ─ ─ ─ ─ ─ ─ ┘
                        │
    ┌ ─ ─ ─ ─ ─ ─ ─ ─ ─ │─ ─ ─ ─ ─ ─ ─ ┐       ⌒320
    │   ┌───────────────────────────────┐│─S320
    │   │ Cyber risk index calculation for CBS│
    │   └───────────────────────────────┘│
    │                  │                 │
    │   ┌───────────────────────────────┐│
    │   │     Anomaly graph creation     │┼─S330
    │   └───────────────────────────────┘│
    └ ─ ─ ─ ─ ─ ─ ─ ─ ─ ┼ ─ ─ ─ ─ ─ ─ ─ ┘
                        │
              ┌─────────────────────┐
              │         End         │
              └─────────────────────┘
```

【FIG. 12】

| TYPE | CVE score | | | Attack Surface Score | | | | | | | | | | | Threat Score | | |
| | | | Network | | | | | System | | | | | | | | | |
| | | | | | | | | Secure control | | | | | | | | | |
| | O/S | Installed program | Open Port | Using weak Protocol | Running Damon | Identification and authentication | Use control | System integrity | Data confidentiality | Restricted data flow | Timely response to events | Resource availability | Source IP | Destination IP | Detected Rule |
| CBS n | c1 | c1 | n1 | n2 | n4 | s1 | s2 | s3 | s4 | s5 | s6 | s7 | t1 | t2 | t3 |

【FIG. 13】

## INTERNATIONAL SEARCH REPORT

| International application No. |
|---|
| **PCT/KR2024/007462** |

**A. CLASSIFICATION OF SUBJECT MATTER**

**G06F 21/57**(2013.01)i; **H04L 9/40**(2022.01)i; **G06Q 10/06**(2012.01)i; **G06N 20/00**(2019.01)i; **G06F 3/0484**(2013.01)i

According to International Patent Classification (IPC) or to both national classification and IPC

**B. FIELDS SEARCHED**

Minimum documentation searched (classification system followed by classification symbols)

G06F 21/57(2013.01); G06F 16/904(2019.01); G06F 16/93(2019.01); G06N 3/04(2006.01); G06N 3/08(2006.01); H04L 12/24(2006.01); H04L 12/26(2006.01); H04L 29/06(2006.01); H04L 67/12(2022.01); H04L 9/40(2022.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 선박(ship), CBS(computer based system), 사이버 위협(cyber threat), 스코어 (score), 보안(security)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2433928 B1 (ORANGE SECURITY CO., LTD.) 19 August 2022 (2022-08-19) See paragraph [0049]; claims 1-2; and figures 5-7 and 10-17. | 1-5 |
| Y | US 2016-0050225 A1 (HONEYWELL INTERNATIONAL INC.) 18 February 2016 (2016-02-18) See claim 1. | 1-5 |
| Y | KR 10-2406756 B1 (ORANGE SECURITY CO., LTD.) 10 June 2022 (2022-06-10) See claims 1-2. | 6-7,9 |
| A | | 8,10-11 |
| Y | KR 10-2069326 B1 (HANWHA SYSTEMS CO., LTD.) 22 January 2020 (2020-01-22) See claims 6 and 9. | 6-7,9 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 September 2024** | **24 September 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
|---|
| **PCT/KR2024/007462** |

**C. DOCUMENTS CONSIDERED TO BE RELEVANT**

| Category* | Citation of document, with indication, where appropriate, of the relevant passages | Relevant to claim No. |
|---|---|---|
| Y | IASC. Recommendation on incorporating cyber risk management into safety management systems. No. 171, pp. 1-33, May 2022.<br>[Retrieved on 06 August 2024]. Retrieved from <https://www.krs.co.kr/eng/BBS/BF_View.aspx>.<br>See pages 3-8, 17 and 21; and table 1. | 6-7,9 |
| Y | KR 10-1893253 B1 (AGENCY FOR DEFENSE DEVELOPMENT) 29 August 2018 (2018-08-29)<br>See paragraph [0014]; and claim 1. | 12-16 |
| Y | KR 10-2023-0023136 A (ELECTRONICS AND TELECOMMUNICATIONS RESEARCH INSTITUTE) 17 February 2023 (2023-02-17)<br>See claims 1, 3 and 14. | 12-16 |
| Y | KR 10-2295654 B1 (AGENCY FOR DEFENSE DEVELOPMENT) 30 August 2021 (2021-08-30)<br>See paragraphs [0031] and [0034]. | 13-15 |

Form PCT/ISA/210 (second sheet) (July 2022)

**INTERNATIONAL SEARCH REPORT**

International application No.

**PCT/KR2024/007462**

| Box No. III | Observations where unity of invention is lacking (Continuation of item 3 of first sheet) |
|---|---|

This International Searching Authority found multiple inventions in this international application, as follows:

The invention of group 1: claims 1-5 pertain to a method for measuring the cybersecurity status of a ship.
The invention of group 2: claims 6-11 pertain to a method for assessing cybersecurity risks of a ship.
The invention of group 3: claims 12-16 pertain to a method for detecting cybersecurity anomalies of a ship on the basis of machine learning.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**  ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

# EP 4 722 964 A1

| INTERNATIONAL SEARCH REPORT | International application No. |
| Information on patent family members | PCT/KR2024/007462 |

| Patent document cited in search report | | | Publication date (day/month/year) | Patent family member(s) | | | Publication date (day/month/year) |
|---|---|---|---|---|---|---|---|
| KR | 10-2433928 | B1 | 19 August 2022 | WO | 2023-158111 | A1 | 24 August 2023 |
| US | 2016-0050225 | A1 | 18 February 2016 | AU | 2015-302129 | A1 | 18 February 2016 |
| | | | | AU | 2015-302129 | B2 | 19 September 2019 |
| | | | | CN | 106576052 | A | 19 April 2017 |
| | | | | CN | 106576052 | B | 29 September 2020 |
| | | | | EP | 3180891 | A1 | 21 June 2017 |
| | | | | EP | 3180891 | B1 | 13 November 2019 |
| | | | | JP | 2017-525055 | A | 31 August 2017 |
| | | | | JP | 6624692 | B2 | 25 December 2019 |
| | | | | US | 9930058 | B2 | 27 March 2018 |
| | | | | WO | 2016-025226 | A1 | 18 February 2016 |
| KR | 10-2406756 | B1 | 10 June 2022 | WO | 2023-158112 | A1 | 24 August 2023 |
| KR | 10-2069326 | B1 | 22 January 2020 | None | | | |
| KR | 10-1893253 | B1 | 29 August 2018 | KR | 10-2018-0007832 | A | 24 January 2018 |
| KR | 10-2023-0023136 | A | 17 February 2023 | US | 2023-0047450 | A1 | 16 February 2023 |
| KR | 10-2295654 | B1 | 30 August 2021 | KR | 10-2021-0074891 | A | 22 June 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200029266
- KR 102406756
- KR 1020200141774
- KR 100604604